# EUROPEAN PATENT SPECIFICATION

(11) **EP 1 366 215 B1**
(45) Date of publication and mention of the grant of the patent: **19.01.2005**
(21) Application number: 02702626.9
(22) Date of filing: 04.03.2002
(51) Int. Cl.: C25C 3/08, F27D 1/18

(54) **THERMALLY INSULATING STRUCTURAL COMPONENTS RESISTANT TO HIGH TEMPERATURE CORROSIVE MEDIA**
GEGEN KORROSIVEN HOCHTEMPERATURUMGEBUNGEN BESTÄNDIGE WÄRMEISOLIERENDE BAUTEILE
COMPOSANTS STRUCTURELS ISOLANTS THERMIQUEMENT RESISTANT A UN MILIEU CORROSIF A HAUTE TEMPERATURE

(30) Priority: 07.03.2001 WO PCT/IB01/00319
(43) Date of publication of application: 03.12.2003
(73) Proprietor: MOLTECH Invent S.A., 1520 Luxembourg (LU)
(72) Inventor: DE NORA, Vittorio, Nassau (BS); BERCLAZ, George, CH-3968 Veyras/Sierre (CH)
(74) Representative: Cronin, Brian
(86) International application number: PCT/IB2002/000669
(87) International publication number: WO 2002/070784

(56) References cited:
- EP-A- 0 552 402
- WO-A-02/06565
- DATABASE WPI Section Ch, Week 199409 Derwent Publications Ltd., London, GB; Class L02, AN 1994-072914 XP002202169 & RU 2 001 896 C (AS RUSSIA SIBE SECT INORG CHEM INST), 30 October 1993 (1993-10-30)

## Description

### Field of the Invention

The invention relates to thermally insulating structural components such as a cover of a container, in particular of a molten salt electrolytic cell. The structural components are inert and resistant to high temperature corrosive media in the form of liquids, vapours and/or gases, such as NaAlF₄, AlF₃, HF or O₂.

### Background of the Invention

The technology for the production of aluminium by the electrolysis of alumina, dissolved in molten cryolite containing salts, at temperatures around 950°C is more than one hundred years old.

Conventional aluminium production cells are constructed so that in operation a crust of solidified molten electrolyte forms around the inside of the cell sidewalls. At the top of the cell sidewalls, this crust is extended by a ledge of solidified electrolyte which projects inwards over the top of the molten electrolyte. The solid crust in fact extends over the top of the molten electrolyte between the carbon anodes. To replenish the molten electrolyte with alumina in order to compensate for depletion during electrolysis, this crust is broken periodically at selected locations by means of a crust breaker, fresh alumina being fed through the hole in the crust.

This crust/ledge of solidified electrolyte forms part of the cell's heat dissipation system in view of the need to keep the cell in operation at constant temperature despite changes in operating conditions, as when anodes are replaced, or due to damage/wear to the sidewalls, or due to over-heating or cooling as a result of great fluctuations in the operating conditions. In conventional cells, the crust is used as a means for automatically maintaining a satisfactory thermal balance, because the crust/ledge thickness self-adjusts to compensate for thermic unbalances. If the cell overheats, the crust dissolves partly thereby reducing the thermic insulation, so that more heat is dissipated through the sidewalls leading to cooling of the cell contents. On the other hand, if the cell cools the crust thickens which increases the thermic insulation, so that less heat is dissipated, leading to heating of the cell contents.

The presence of a crust of solidified electrolyte is considered to be important to achieve satisfactory operation of commercial cells for the production of aluminium on a large scale. In fact, the heat balance is one of the major concerns of cell design and energy consumption, since only about 25% of such energy is used for the production of aluminium. Optimization of the heat balance is needed to keep the proper bath temperature and heat flow to maintain a frozen electrolyte layer (side ledge) with a proper thickness.

In conventional cells, the major heat losses occur at the sidewalls, the current collector bars and the cathode bottom, which account for about 35%, 8% and 7% of the total heat losses respectively, and considerable attention is paid to providing a correct balance of these losses.

Further losses of 33% occur via the carbon anodes, 10% via the crust and 7% via the deck on the cell sides. This high loss via the anodes is considered inherent in providing the required thermal gradient through the anodes.

In the literature, there have been suggestions for cells operating without a crust of solidified electrolyte.

US Patent 5,368,702 (de Nora) discloses a multimonopolar aluminium production cell operating with tubular anodes in a crustless molten electrolyte which is thermally insulated by a cover. The cover is lined underneath with a layer of thermally insulating material. US Patent 5,415,742 (La Camera/Tomaswick/Ray/Ziegler) disclose another aluminium production cell operating with a crustless molten electrolyte which is thermally insulated by a cover.

Despite previous efforts to develop a cell design for operation with a crustless molten electrolyte, there is still a need to provide a thermic insulating material for cell covers which is resistant to electrolyte vapours and gases evolved during electrolysis and which is sufficiently lightweight but mechanically resistant to be used for removable covers.

### Summary of the Invention

The invention proposes a thermally insulating cover of a container, in particular a molten salt electrolytic cell, which cover is inert and resistant to corrosive media at high temperature in the form of liquids, vapours and/or gases contained in the container, in particular NaAlF₄, AlF₃, HF or O₂, and which during use is exposed to such corrosive media. The cover comprises thermal insulating material shielded from the corrosive media by an openly porous or reticulated alumina structure which is made impermeable by a compact filler made of material resistant and inert to said corrosive media. The filler material comprises compacted particles of refractory material.

The thermal insulating material may consist of or include a part of the openly porous or reticulated alumina structure that contains no filler. The thermal insulting material may also include or be formed of an entirely different body above the openly porous or reticulated filled alumina structure.

The filler may extend throughout the alumina structure. Alternatively, the alumina structure may be only partly filled by the filler, leaving a filler-free part of the alumina structure, in particular a filler-free top part.

For example, the filled part forms a layer which may form an outer surface of the cover, in particular an outer surface of a bottom part of the cover.

In addition, the alumina structure may be covered with an outside layer made of the same filler material, the outside layer forming an outer surface of the cover.

Usually, the alumina structure is a plate having a thickness in the range of 20 to 150 mm. A layer inside the alumina structure may have a thickness in the range of 10 to 100 mm. An outside layer covering the alumina structure can be 2 to 10 mm thick.

Usually, the refractory material of the filler comprises at least one compound selected from metal oxides, carbides and nitrides. For instance, the filler comprises a mixture of metal oxide particles with particles of at least one compound selected from carbides and nitrides. These particles may be applied in a colloidal metal oxide carrier.

Advantageously, the filler is a slurry-applied filler comprising dried colloidal and/or non-colloidal particles of at least one compound selected from metal oxides, carbides and nitrides, in particular selected from oxides, carbides and nitrides of titanium, zirconium, hafnium, vanadium, silicon, niobium, tantalum, nickel, molybdenum and iron. Suitable colloids may be selected from colloidal alumina, ceria, lithia, magnesia, silica, thoria, yttria, zirconia, tin oxide, zinc oxide and mixtures thereof. Colloidal precursors of such oxides, in particular hydroxides, may also be used. Further colloidal slurries which may be used as a filler material are disclosed in US Patents 5,310,476 and 5,364,513 (both in the name of Sekhar/de Nora).

For instance, the filler comprises a cement that consists predominantly of at least one of alumina, silica and titania particles. The filler may be made of alumina and silica, in particular with an alumina content of at least 80 weight%, in particular at least 90 or even 95 weight%. The filler may comprise a mixture of alumina and titania.

In one embodiment, the thermally insulating cover comprises an insulating layer and a protective layer that shields the insulating layer(s) from the corrosive media, the protective layer being made of the openly porous or reticulated filled. alumina structure. Preferably, the insulating layer(s) and the protective layer are mechanically secured together, in particular by means of one or more metallic attachment members extending through vertical holes of the protective layer and the insulating layer. The hole(s) in the insulating layer(s) may extend into recess(es) located in a bottom face of the alumina structure. Each recess can be arranged to embed a head of one or more of the attachment members and can be filled with the filler to protect the attachment member from the corrosive media. Usually, a top metallic shell extends over the insulating layer(s) and downwards along lateral sides of the cover.

The thermally insulating cover of the invention may be used on any container containing high temperature oxidising and/or corrosive media, in particular vapours and/or gases. In particular, the cover is used for aluminium electrowinning cells. The cover can also be used for other molten salt electrolytic cells, for example for the production of magnesium or other metals produced electrolytically. The cover may also be used in furnaces, such as arc furnaces for the production of steel or molten metal treatment apparatus, such as metal degassing apparatus. Further details of such apparatus may be found in WO00/63630 (Holz/Duruz), WO01/42168 (de Nora/Duruz) and WO01/42531 (Nguyen/Duruz/de Nora).

More generally, the invention relates to a thermally insulating structural component which is inert and resistant to corrosive media at high temperature in the form of liquids, vapours and/or gases, in particular NaAlF₄, AlF₃, HF or O₂, and which during use is exposed to such corrosive media. In accordance with the invention, the component is made an openly porous or reticulated alumina structure which is made impermeable by a compact filler made of material resistant and inert to said corrosive media. The component may comprise any of the above described features or combination thereof.

The component may be a rigid, fire-resistant, lightweight panel, wall, door, lid, beam, balk or girder, housing or other structural component that can be utilised in the construction of containers, pressure vessels, reservoirs, ovens or furnaces etc.

The invention will be further described in the following Example.

### Brief Description of The Drawing

The invention will be further described with reference to the accompanying schematic drawing which shows a section of a composite thermally insulating cell cover in accordance with the invention.

### Detailed Description

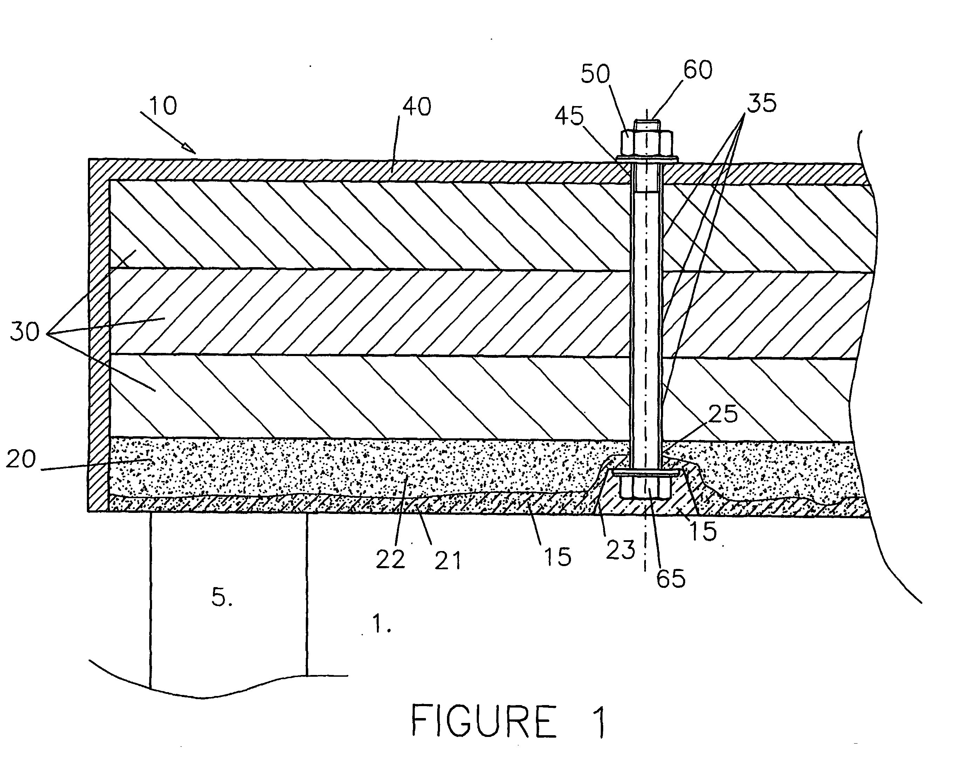

Figure 1 shows part of a composite thermally insulating cover 10 according to the invention which during use can be placed above a molten salt electrolyte of an electrolytic cell, in particular a cell for the electrowinning of aluminium from alumina dissolved in a fluoride-based crustless molten electrolyte.

The composite thermally insulating cover 10 comprises a plurality of superimposed layers 20,30 secured in a steel outer shell 40 which extends over the superimposed layers 20,30 and downwards along lateral sides of the cover 10.

As shown in Figure 1, the superimposed layers consist of three upper insulating layers 30 which can be made of known insulating material, for example CERABOARD™ material, and a lower protective layer 20. The protective layer 20 is made of the openly porous or reticulated filled alumina structure according to the invention and shields the insulating layers 30 from corrosive media, such as NaAlF₄, AlF₃, HF or O₂, present as vapours in an aluminium production cell above the molten electrolyte.

Superimposed layers 20,30 are secured in the steel outer shell 40 by pairs of nuts 50 and bolts 60, one pair of which is shown in Figure 1. The nuts 50 and bolts 60 can be made of ceramic material resistant to the corrosive media 1, such as fused alumina, or steel preferably coated with this ceramic material. Each bolt 60 extends through vertically aligned holes 25,35,45 of steel shell 40, insulating layers 30 and protective layer 20 with the bolt 60's head 65 anchored in a recess 23 located in the bottom face of protective layer 20.

In accordance with the invention, the protective layer 20 is made of an openly porous or reticulated alumina structure which is impermeabilized by a compact filler 15 made of material resistant and inert to corrosive media 1 and comprising packed particles of at least one compound selected from metal oxides, carbides and nitrides, for instance an alumina cement.

The alumina structure of protective layer 20 is partly filled with filler 15, leaving on top a filler-free part 22 of the alumina structure. As shown in Figure 1, the filled part 21 of the alumina structure forms the outer bottom surface of cover 10. Filler 15 is also used to fill the recess 23, so the bolt's heads 65 are completely embedded in filler 15 and protected from corrosive media 1 contained in the aluminium production cell.

In a variation, the filler material of the protective layer 20 may extend outside the openly porous or reticulated structure, forming a surface layer on the bottom of cover 10. In another variation, the filler material extends throughout protective layer 20.

In a further variation, the head 65 of the bolt 60 can be anchored with cement in a recess (having similar dimensions as recess 23) located in the upper face of the protective layer 20. In this case, the bolt 60 does not extend through the protective layer 20 and no through hole is needed in the protective layer 20 whose bottom face is continuous.

The invention will be further described in the following Example.

### Example 1

An openly porous alumina plate with a porosity of 20 ppi (equivalent to about 8 pores per centimetre) having a thickness of 5 cm and a surface of 25 x 25 cm was made impermeable to corrosive vapours by impregnating and coating its bottom face with an alumina slurry.

The slurry used to impermeabilize the porous alumina plate was KERATHIN HA™ produced by RATH GmbH. This slurry is made of an aqueous binder containing ceramic particles with a liquid weight content between 30 and 50%. The ceramic particles consist essentially of particles of alumina (98 wt%) and of silica (2 wt%) having sizes below 0.5 mm.

Layers of the slurry were successively applied to the plate's bottom face. Each layer of the slurry was allowed to dry for several minutes before applying the next. After several layers of the slurry had been applied, the dried and compacted slurry formed a filler layer of 5 to 10 mm inside the plate and a coating of about 3 mm outside the plate leaving the impregnated and coated plate's bottom face with no surface porosity. Typically, this can be achieved with three to six applied layers of the slurry depending on its rheology.

### Example 2

An openly porous alumina plate with a porosity of 80 ppi (equivalent to about 32 pores per centimetre) having a thickness of 5 cm and a surface of 25 x 25 cm was made impervious by filling it throughout with a titania-alumina filler and then sealing it as in Example 1 by applying a coating on its bottom.

The titania-alumina filling was produced from a slurry made of 40 g TiO₂ particles (-325 mesh or <42 micrometer) in colloidal aluminium hydroxide consisting of 200 ml Nyacol® (A1-20, a milky liquid with a colloidal particle size grade of about 40 to 60 nanometer) and 20 ml CONDEA® (10/2 Sol, a clear, opalescent liquid with a colloidal particle size grade of about 10 to 30 nanometer), the aluminium hydroxide forming alumina upon heat treatment.

The porous alumina plate was immersed into the titania slurry to infiltrate it with the slurry and then dried for 20 minutes as 60°C. The infiltration was repeated followed by drying for 10 hours at 60°C (alternatively it can be dried for 24 hours at room temperature) and heat treating for 10 hours between about 780° and 800°C.

During heat treatment, the titania reacted with the aluminium hydroxide to form a stable titanium-aluminium mixed oxide which increase the stability of the alumina plate.

The filled alumina plate was then sealed off by coating its bottom face with an alumina slurry (KERATHIN HA™) as in Example 1.

### Example 3

The impervious plates of Example 1 and 2 were tested as lids on top of crucibles containing a molten cryolite-based electrolyte at 870°C. The electrolyte comprised, in addition to cryolite, an excess of aluminium fluoride in an amount of 28% of the cryolite weight.

During the test, the impermeabilized plates inhibited evaporation of the electrolyte and dissipation of heat.

After 3 weeks, the impermeabilized plates were removed from the crucibles. Visual examination of the impermeabilized plates showed that they had not been damaged by chemical attack or otherwise.

## Claims

1. A thermally insulating cover of a cell for the electrowinning of aluminium from alumina dissolved in a fluoride-based molten electrolyte, which cover is inert and resistant to high temperature corrosive media in the form of liquids, vapours and/or gases that are contained in the cell and that comprise vapours from the electrolyte, and which cover during use is exposed to such corrosive media, said cover comprising thermal insulating material shielded from the corrosive media by an openly porous or reticulated alumina structure which is made impermeable by a compact filler made of material resistant and inert to said corrosive media, the filler material comprising compacted particles of refractory material.

2. The thermally insulating cover of claim 1, wherein said filler completely fills an outermost part of the structure, in particular a outermost bottom part.

3. The thermally insulating cover of claim 2, wherein the filler extends throughout the alumina structure.

4. The thermally insulating cover of claim 1 or 2, wherein the alumina structure is partly filled by the filler, leaving a filler-free part of the alumina structure, in particular a filler-free top part.

5. The thermally insulating cover of claim 4, wherein the filled part forms a layer in the alumina structure.

6. The thermally insulating cover of any preceding claim, wherein the alumina structure is a plate having a thickness in the range of 20 to 150 mm.

7. The thermally insulating cover of claim 6 when depending on claim 5, wherein the filler forms a layer in the plate, the layer having a thickness in the range of 10 to 100 mm.

8. The thermally insulating cover of any preceding claim, wherein the alumina structure is covered with a layer made of the filler material.

9. The thermally insulating cover of claim 8, wherein the layer covering the alumina structure has a thickness in the range of 2 to 10 mm.

10. The thermally insulating cover of any preceding claim, wherein the refractory material of the filler comprises at least one compound selected from metal oxides, carbides and nitrides.

11. The thermally insulating cover of claim 10, wherein the filler comprises a mixture of metal oxide particles with particles of at least one compound selected from carbides and nitrides.

12. The thermally insulating cover of any preceding claim, wherein the filler is a slurry-applied filler comprising dried colloidal and/or non-colloidal particles of at least one compound selected from metal oxides, carbides and nitrides and precursors thereof.

13. The thermally insulating cover of claim 12, wherein the filler comprises a cement that consists predominantly of at least one of alumina, silica and titania particles.

14. The thermally insulating cover of claims 13, wherein the cement comprises a mixture of silica an alumina, preferably containing at least 80 weight% alumina.

15. The thermally insulated cover of claim 12, wherein the filler comprises a mixture of alumina and titania.

16. The thermally insulating cover of claim 12, wherein the filler comprises particles of at least one compound selected from carbides and nitrides in a dried colloidal metal oxide carrier.

17. The thermally insulating cover of any preceding claim, which comprises one or more insulating layers and a protective layer that shields the insulating layer(s) from said corrosive media, the protective layer being made of said openly porous or reticulated filled alumina structure.

18. The thermally insulating cover of claim 17, wherein the insulating layer(s) and the protective layer are mechanically secured together.

19. The thermally insulating cover of claim 18, wherein the insulating layer(s) and the protective layer are mechanically secured together by means of one or more metallic attachment members extending through vertical holes of the protective layer and the insulating layer.

20. The thermally insulating cover of claim 19, wherein the or each vertical hole in the insulating layer(s) extends into a recess located in a bottom face of the alumina structure, said recess being arranged to embed a head of one or more of the attachment members, said recess being filled with said filler to protect the attachment member from said corrosive media.

21. The thermally insulating cover of claim 17, 18, 19 or 20, which comprises a top metallic shell which extends over the insulating layer(s) and downwards along lateral sides of the cover.

22. A cell for the electrowinning of aluminium from alumina dissolved in a fluoride-based molten electrolyte, comprising a thermally insulating cover as defined in any preceding claim.

## Patentansprüche

1. Wärmeisolierende Abdeckung einer Zelle zur elektrolytischen Gewinnung von Aluminium aus Aluminiumoxid, das in einem auf Fluorid basierenden, geschmolzenen Elektrolyten gelöst ist, wobei die Abdeckung inert ist und gegenüber bei hoher Temperatur korrosiven Medien in Form von Flüssigkeiten, Dämpfen und/oder Gasen beständig ist, die in der Zelle enthalten sind und Dämpfe des Elektrolyten umfassen, wobei die Abdeckung während der Verwendung solchen korrosiven Medien ausgesetzt ist, wobei die Abdeckung Wärmeisolationsmaterial umfasst, das gegen die korrosiven Medien durch eine offenporige oder netzartige Aluminiumoxidstruktur abgeschirmt ist, die durch einen kompakten Füllstoff undurchlässig gemacht worden ist, der aus einem Material hergestellt worden ist, das gegenüber den korrosiven Medien beständig und inert ist, wobei das Füllstoffmaterial kompaktierte Teilchen aus feuerfestem Material umfasst.

2. Wärmeisolierende Abdeckung nach Anspruch 1, bei der der Füllstoff einen äußersten Teil der Struktur vollständig füllt, insbesondere einen äußersten Bodenteil.

3. Wärmeisolierende Abdeckung nach Anspruch 2, bei der der Füllstoff sich überall in der Aluminiumoxidstruktur erstreckt.

4. Wärmeisolierende Abdeckung nach Anspruch 1 oder 2, bei der die Aluminiumoxidstniktur teilweise mit dem Füllstoff gefüllt ist, wobei ein füllstofffreier Teil der Aluminiumoxidstruktur zurückbleibt, insbesondere ein füllstofffreier oberer Teil.

5. Wärmeisolierende Abdeckung nach Anspruch 4, bei der der gefüllte Teil eine Schicht in der Aluminiumoxidstruktur bildet.

6. Wärmeisolierende Abdeckung nach einem der vorhergehenden Ansprüche, bei der die Aluminiumoxidstruktur eine Platte mit einer Dicke im Bereich von 20 bis 150 mm ist.

7. Wärmeisolierende Abdeckung nach Anspruch 6, wenn abhängig von Anspruch 5, bei der der Füllstoff eine Schicht in der Platte bildet, wobei die Schicht eine Dicke im Bereich von 10 bis 100 mm aufweist.

8. Wärmeisolierende Abdeckung nach einem der vorhergehenden Ansprüche, bei der die Aluminiumoxidstruktur mit einer Schicht bedeckt ist, die aus dem Füllstoffmaterial hergestellt worden ist.

9. Wärmeisolierende Abdeckung nach Anspruch 8, bei der die Schicht, die die Aluminiumoxidstruktur bedeckt, eine Dicke im Bereich von 2 bis 10 mm aufweist.

10. Wärmeisolierende Abdeckung nach einem der vorhergehenden Ansprüche, bei der das feuerfeste Material des Füllstoffs mindestens eine Verbindung ausgewählt aus Metalloxiden, Carbiden und Nitriden umfasst.

11. Wärmeisolierende Abdeckung nach Anspruch 10, bei der der Füllstoff eine Mischung aus Metalloxidteilchen und Teilchen von mindestens einer Verbindung ausgewählt aus Carbiden und Nitriden umfasst.

12. Wärmeisolierende Abdeckung nach einem der vorhergehenden Ansprüche, bei der der Füllstoff ein durch Aufschlämmung aufgebrachter Füllstoff ist, der getrocknete kolloidale und/oder nicht-kolloidale Teilchen von mindestens einer Verbindung ausgewählt aus Metalloxiden, Carbiden und Nitriden und Vorläufern derselben umfasst.

13. Wärmeisolierende Abdeckung nach Anspruch 12, bei der der Füllstoff einen Zement umfasst, der überwiegend aus mindestens einem von Aluminiumoxid-, Siliciumdioxid- und Titandioxidteilchen besteht.

14. Wärmeisolierende Abdeckung nach Anspruch 13, bei der der Zement eine Mischung aus Siliciumdioxid und Aluminiumoxid umfasst, die vorzugsweise mindestens 80 Gew.-% Aluminiumoxid enthält.

15. Wärmeisolierende Abdeckung nach Anspruch 12, bei der der Füllstoff eine Mischung aus Aluminiumoxid und Titandioxid umfasst.

16. Wärmeisolierende Abdeckung nach Anspruch 12, bei der der Füllstoff Teilchen von mindestens einer Verbindung ausgewählt aus Carbiden und Nitriden in einem getrockneten kolloidalen Metalloxidträger umfasst.

17. Wärmeisolierende Abdeckung nach einem der vorhergehenden Ansprüche, die eine oder mehrere Isolierschichten und eine Schutzschicht umfasst, die die Isolierschicht(en) vor den korrosiven Medien schützt, wobei die Schutzschicht aus der offenporigen oder netzartigen gefüllten Aluminiumoxidstruktur hergestellt worden ist.

18. Wärmeisolierende Abdeckung nach Anspruch 17, bei der die Isolierschicht(en) und die Schutzschicht mechanisch aneinander gesichert sind.

19. Wärmeisolierende Abdeckung nach Anspruch 18, bei der die Isolierschicht(en) und die Schutzschicht mechanisch aneinander mittels einem oder mehrerer metallischer Befestigungselemente gesichert sind, die sich durch senkrechte Löcher der Schutzschicht und der Isolierschicht erstrecken.

20. Wärmeisolierende Abdeckung nach Anspruch 19, bei der die oder jedes senkrechte Loch in der Isolierschicht (den Isolierschichten) sich in einen Rücksprung erstreckt, der in einer Bodenfläche der Aluminiumoxidstruktur angeordnet ist, wobei der Rücksprung so ausgelegt ist, dass er einen Kopf von einem oder mehreren der Befestigungselemente einbettet, wobei der Rücksprung mit dem Füllstoff gefüllt ist, um die Befestigungselemente vor den korrosiven Medien zu schützen.

21. Wärmeisolierende Abdeckung nach den Ansprüchen 17, 18, 19 oder 20, die eine obere metallische Schale umfasst, die sich über die Isolierschicht(en) und abwärts entlang den lateralen Seiten der Abdeckung erstreckt.

22. Zelle zur elektrolytischen Gewinnung von Aluminium aus Aluminiumoxid, das in einem auf Fluorid basierenden, geschmolzenen Elektrolyten gelöst ist, die eine wärmeisolierende Abdeckung gemäß einem der vorhergehenden Ansprüche umfasst.

## Revendications

1. Couvercle thermiquement isolant d'une cuve pour l'électro-obtention d'aluminium à partir d'alumine dissoute dans un électrolyte fondu à base de fluorure, lequel couvercle est inerte et résistant à des milieux corrosifs à haute température sous la forme de liquides, vapeurs et/ou gaz qui sont contenus dans la cuve et qui comprennent des vapeurs à partir de l'électrolyte, et lequel couvercle pendant l'utilisation est exposé à de tels milieux corrosifs, ledit couvercle comprenant une matière à isolation thermique protégée des milieux corrosifs par une structure en alumine largement poreuse ou réticulée qui est rendue imperméable par une charge compacte réalisée en une matière résistante et inerte auxdits milieux corrosifs, la matière de charge comprenant des particules comprimées de matière réfractaire.

2. Couvercle thermiquement isolant selon la revendication 1, dans lequel ladite charge remplit complètement une partie la plus externe de la structure, en particulier une partie de fond la plus externe.

3. Couvercle thermiquement isolant selon la revendication 2, dans lequel la charge s'étend d'un bout à l'autre de la structure en alumine.

4. Couvercle thermiquement isolant selon la revendication 1 ou 2, dans lequel la structure en alumine est partiellement remplie par la charge, laissant une partie de la structure en alumine dépourvue de charge, en particulier une partie supérieure dépourvue de charge.

5. Couvercle thermiquement isolant selon la revendication 4, dans lequel la partie chargée forme une couche dans la structure en alumine.

6. Couvercle thermiquement isolant selon une quelconque revendication précédente, dans lequel la structure en alumine est une plaque ayant une épaisseur dans la plage de 20 à 150 mm.

7. Couvercle thermiquement isolant selon la revendication 6, quand elle dépend de la revendication 5, dans lequel la charge forme une couche dans la plaque, la couche ayant une épaisseur dans la plage de 10 à 100 mm.

8. Couvercle thermiquement isolant selon une quelconque revendication précédente, dans lequel la structure en alumine est recouverte d'une couche réalisée avec la matière de charge.

9. Couvercle thermiquement isolant selon la revendication 8, dans lequel la couche recouvrant la structure en alumine a une épaisseur dans la plage de 2 à 10 mm.

10. Couvercle thermiquement isolant selon une quelconque revendication précédente, dans lequel la matière réfractaire de la charge comprend au moins un composé choisi à partir d'oxydes, de carbures et de nitrures métalliques.

11. Couvercle thermiquement isolant selon la revendication 10, dans lequel la charge comprend un mélange de particules d'oxydes métalliques avec des particules d'au moins un composé choisi à partir de carbures et de nitrures.

12. Couvercle thermiquement isolant selon une quelconque revendication précédente, dans lequel la charge est une charge appliquée de coulis comprenant des particules colloïdales et/ou non colloïdales séchées d'au moins un composé choisi à partir d'oxydes, de carbures et de nitrures métalliques et des précurseurs de ceux-ci.

13. Couvercle thermiquement isolant selon la revendication 12, dans lequel la charge comprend un cément qui se compose, de façon prédominante, d'au moins l'une des particules d'alumine, de silice et d'oxyde de titane.

14. Couvercle thermiquement isolant selon la revendication 13, dans lequel le cément comprend un mélange de silice et d'alumine, contenant de préférence au moins 80% en poids d'alumine.

15. Couvercle thermiquement isolant selon la revendication 12, dans lequel la charge comprend un mélange d'alumine et d'oxyde de titane.

16. Couvercle thermiquement isolant selon la revendication 12, dans lequel la charge comprend des particules d'au moins un composé choisi à partir de carbures et de nitrures dans un support d'oxyde métallique colloïdal séché.

17. Couvercle thermiquement isolant selon une quelconque revendication précédente, qui comprend une ou plusieurs couches isolantes et une couche protectrice qui protège la ou les couches isolantes desdits milieux corrosifs, la couche protectrice étant réalisée avec ladite structure en alumine chargée largement poreuse ou réticulée.

18. Couvercle thermiquement isolant selon la revendication 17, dans lequel la ou les couches isolantes et la couche protectrice sont mécaniquement fixées ensemble.

19. Couvercle thermiquement isolant selon la revendication 18, dans lequel la ou les couches isolantes et la couche protectrice sont mécaniquement fixées ensemble par l'intermédiaire d'un ou de plusieurs éléments de fixation métalliques s'étendant à travers des trous verticaux de la couche protectrice et de la couche isolante.

20. Couvercle thermiquement isolant selon la revendication 19, dans lequel le ou chaque trou vertical dans la ou les couches isolantes s'étend dans un évidement situé dans une face de fond de la structure en alumine, ledit évidement étant agencé pour loger une tête d'un ou de plusieurs des éléments de fixation, ledit évidement étant rempli avec ladite charge pour protéger l'élément de fixation desdits milieux corrosifs.

21. Couvercle thermiquement isolant selon la revendication 17, 18, 19 ou 20, qui comprend une coque métallique supérieure qui s'étend sur la ou les couches isolantes et vers le bas le long des côtés latéraux du couvercle.

22. Cuve pour l'électro-obtention d'aluminium à partir d'alumine dissoute dans un électrolyte fondu à base de fluorure, comprenant un couvercle thermiquement isolant tel que défini dans une quelconque revendication précédente.
